Europäisches Patentamt

European Patent Office

Office européen des brevets

(19)

(11) Numéro de publication : **0 358 551 B1**

(12)

# FASCICULE DE BREVET EUROPEEN

(45) Date de publication du fascicule du brevet :
**09.12.92 Bulletin 92/50**

(51) Int. Cl.⁵ : **B01D 53/22,** C01B 31/20

(21) Numéro de dépôt : **89402385.2**

(22) Date de dépôt : **01.09.89**

(54) **Procédé et installation de séparation d'un constituant d'un mélange gazeux.**

(30) Priorité : **08.09.88 FR 8811736**

(43) Date de publication de la demande :
**14.03.90 Bulletin 90/11**

(45) Mention de la délivrance du brevet :
**09.12.92 Bulletin 92/50**

(84) Etats contractants désignés :
**AT BE CH DE ES FR GB GR IT LI LU NL SE**

(56) Documents cités :
**EP-A- 0 029 600**
**GB-A- 2 053 021**
**US-A- 3 250 080**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur : **Brugerolle, Jean-Renaud**
**9, Rue des Bauches**
**F-75016 Paris (FR)**
Inventeur : **Ferenczi, Laurent**
**13, passage Ramey**
**F-75018 Paris (FR)**

(74) Mandataire : **Le Moenner, Gabriel et al**
**L'AIR LIQUIDE 75, Quai d'Orsay**
**F-75321 Paris Cédex 07 (FR)**

EP 0 358 551 B1

# Description

La présente invention est relative à un procédé de séparation d'un constituant particulier d'un mélange gazeux. Elle s'applique en particulier à l'élimination du CO2 d'un mélange hydrogène-anhydride carbonique ($CO_2$)-monoxyde de carbone(CO).

La technique classique pour effectuer une telle élimination consiste à laver le mélange, soit au moyen d'amines (lavage chimique), soit au moyen de produits ayant une "action physique" d'absorption. Ceci conduit à un investissement et une dépense d'énergie importants.

Le document US-A- 3.250.080 décrit un procédé de séparation d'un mélange gazeux par diffusion et fractionnement mettant en oeuvre une batterie de cellules de perméation montées en série à la fois du côté haute pression et du côté basse pression et on fait recycler une partie du gaz résiduel de l'extrémité de sortie haute pression vers l'extrémité d'entrée basse pression des cellules.

Une telle installation est particulièrement complexe.

Les documents GB-A- 2.053.021 et EP-A- 0.029.600 décrivent également des systèmes de séparation de gaz issu d'un compartiment haute pression d'un séparateur à membrane vers le compartiment basse pression. Il n'y a pas de traitement au cours de ce recyclage.

L'invention a pour but de fournir une technique très simple et très économique de séparation.

A cet effet, le procédé suivant l'invention est caractérisé en ce que :

- on fait passer le mélange dans l'espace d'entrée d'un perméateur dans lequel on sépare par perméation au moins une partie d'un constituant plus perméable que ledit constituant particulier ;
- on traite le résidu de ce perméateur en en éliminant ledit constituant particulier, de façon à produire un courant gazeux intermédiaire contenant un troisième constituant ; et
- on injecte ce courant gazeux dans l'espace de production du perméateur, tout en maintenant, pendant ledit traitement, la pression partielle dudit constituant plus perméable dudit mélange à la sortie de l'espace de production du perméateur, à une valeur inférieure à celle que ce constituant plus perméable possède dans le mélange de départ.

Suivant un mode de mise en oeuvre préféré de l'invention, on élimine ledit constituant par perméation dans un second perméateur dont le résidu constitue le courant gazeux intermédiaire.

L'invention a également pour objet une installation destinée à la mise en oeuvre d'un tel procédé. Cette installation est caractérisée en ce qu'elle comprend :

- un perméateur dont l'espace d'entrée est relié à une source dudit mélange et qui permet la perméation d'un constituant plus perméable que ledit constituant particulier ;
- un appareil de traitement du résidu de ce perméateur comprenant des moyens d'élimination dudit constituant ; et
- des moyens d'injection de l'effluent de cet appareil dans l'espace de production du perméateur,

l'appareil de traitement comportant des moyens pour maintenir la pression partielle d'un constituant plus perméable dudit mélange à la sortie de l'espace de production du perméateur à une valeur inférieure à celle que ce constituant plus perméable possède dans le mélange de départ.

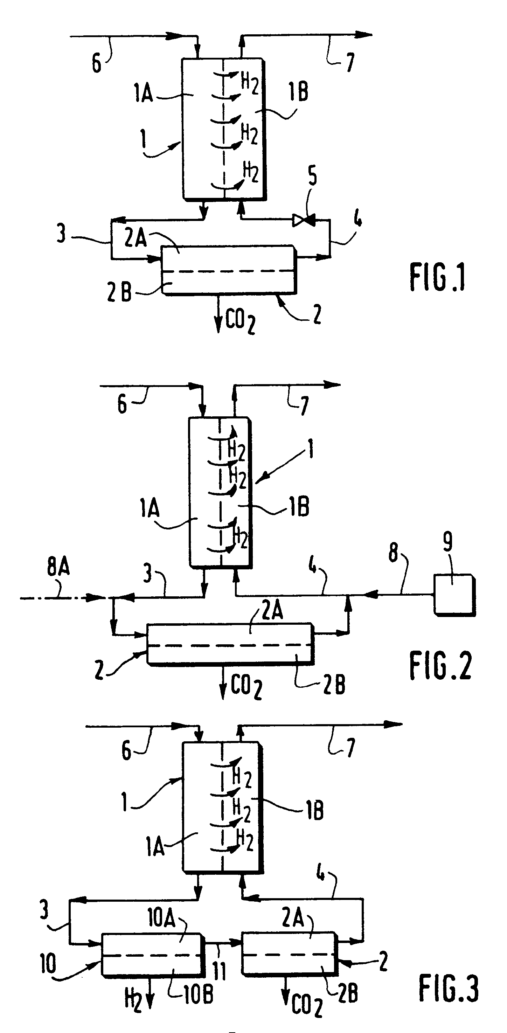

Quelques exemples de mise en oeuvre de l'invention vont maintenant être décrits en regard du dessin annexé, sur lequel les figures 1 à 3 illustrent schématiquement trois variantes de l'installation suivant l'invention.

L'installation représentée à la figure 1 est destinée à fournir sous une moyenne pression un mélange hydrogène-monoxyde de carbone à partir d'un mélange gazeux constitué essentiellement d'hydrogène, de monoxyde de carbone et de CO2. Cette installation comprend un premier perméateur 1 comportant un espace d'entrée haute pression 1A et un espace de production moyenne pression 1B, et un second perméateur 2 comportant un espace haute pression 2A et un espace basse pression 2B. Les espaces 1A et 2A sont reliés par une première conduite 3 ; les espaces 2A et 1B sont reliés par une seconde conduite 4 équipée d'une vanne de détente 5.

Le perméateur 1 est adapté pour séparer l'hydrogène des autres constituants du mélange qui y est introduit, par exemple grâce à un faisceau de fibres creuses constituées par une membrane à perméabilité sélective. De tels perméateurs sont disponibles dans le commerce.

De même, le perméateur 2 est adapté pour séparer le CO2 des autres constituants du mélange qui y est introduit, par exemple grâce à un faisceau de fibres creuses constituées par une membrane à perméabilité sélective. De tels perméateurs sont également disponibles dans le commerce.

En fonctionnement, le mélange de départ arrive sous une haute pression dans l'espace 1A par une conduite 6 et subit une première perméation au cours de laquelle l'hydrogène qu'il contenait passe dans l'espace 1B. Le résidu de cette perméation, constitué essentiellement par un mélange monoxyde de carbone-CO2, passe dans l'espace 2A et subit une seconde perméation au cours de laquelle le CO2 passe dans l'espace 2B. Le résidu de cette deuxième perméation, constitué essentiellement par le monoxyde de carbone contenu dans le mélange initial, est détendu dans la vanne 5 et envoyé dans l'espace 1B. Là, le monoxyde de carbone est mélangé avec l'hydrogène issu de la première perméation, ce qui fournit à la sortie de production du perméateur 1, via une conduite 7, un mélange hydrogène-monoxyde de carbone sous moyenne pression. Pour que ce fonctionnement soit possible, il suffit que la pression partielle de l'hydrogène soit inférieure dans le mélange final à ce qu'elle est dans le mélange initial. Ainsi, avec un mélange initial à 60 % d'hydrogène sous 35 bars, la pression partielle de l'hydrogène est 21 bars. On peut donc par exemple fournir un mélange hydrogène-monoxyde de carbone à 80 % d'hydrogène sous 20 bars, la pression partielle de l'hydrogène dans un tel mélange étant 16 bars.

Comme indiqué sur la figure 1, la circulation des deux flux gazeux dans le perméateur 1 peut avantageusement s'effectuer à contre-courant.

L'installation de la figure 2 ne diffère de celle de la figure 1 que par le fait que la vanne de détente 5 est supprimée tandis qu'une conduite 8 reliée à une source 9 d'un gaz auxiliaire débouche dans la conduite 4. Le gaz auxiliaire contient peu ou pas d'hydrogène et de CO2 et est par exemple du méthane, du monoxyde de carbone et/ou de l'azote.

Grâce à l'injection du gaz auxiliaire dans la conduite 4, le perméat du perméateur 1 est dilué, ce qui permet d'assurer sans baisse notable de la pression totale une réduction de la pression partielle d'hydrogène dans l'espace 1B. Ainsi, en tenant compte des pertes de charge, un mélange initial contenant 60 % d'hydrogène, 20 % de CO2 et 20 % de CO sous 35 bars peut fournir sous 32 bars un mélange à 50 % d'hydrogène (soit une pression partielle d'hydrogène de 16 bars), 15 % de CO et 35 % du gaz auxiliaire. Cette variante permet même d'obtenir dans le conduit 7 des mélanges à une pression totale supérieure à la pression de départ.

En variante, comme indiqué en trait mixte, la dilution précitée peut s'effectuer en amont du perméateur 2, au moyen d'une conduite 8A débouchant dans la conduite 3, si le gaz auxiliaire contient du CO2.

L'installation représentée à la figure 3 diffère de celle de la figure 1 par le fait que la vanne de détente 5 est supprimée, tandis qu'un perméateur intermédiaire 10 équipé de membranes de séparation d'hydrogène est monté entre les perméateurs 1 et 2. Plus précisément, la conduite 3 débouche dans l'espace haute pression 10A du perméateur 10, espace qui est relié par une conduite 11 à l'espace haute pression 2A du perméateur 2.

En fonctionnement, une partie seulement de l'hydrogène contenu dans le mélange initial permée dans l'espace 1B, le reste de cet hydrogène étant éliminé par perméation dans l'espace basse pression 10B du perméateur intermédiaire 10. Cette élimination d'une partie de l'hydrogène permet de nouveau de réduire la pression partielle de l'hydrogène dans l'espace 1B et, par suite, de produire un mélange H2/CO sans baisse notable de pression.

En variante, si la production d'hydrogène basse pression n'est pas recherchée, on peut supprimer le perméateur 10. En effet, les membranes perméables au CO2 laissent aussi passer l'hydrogène, de sorte que le perméateur 2, moyennant un réglage approprié des paramètres de fonctionnement, peut assurer à lui seul l'élimination de l'excès d'hydrogène et celle du CO2.

Les installations des figures 2 et 3 conviennent en particulier pour la production d'un mélange hydrogène-monoxyde de carbone à partir d'un gaz de craquage ou de réformage d'hydrocarbures présentant un ratio hydrogène/monoxyde de carbone trop élevé par rapport aux besoins.

Dans tous les cas, l'élimination totale du CO2 peut nécessiter un lavage chimique ou physique du mélange final. Ce lavage ne nécessitera qu'un investissement et une dépense d'énergie réduits puisque l'essentiel du CO2 aura préalablement été éliminé par perméation.

Il est à noter que l'invention s'applique essentiellement à l'élimination du $CO_2$ par perméation, qui n'est pas réalisable telle quelle puisque les perméateurs laissent en même temps passer l'hydrogène. Toutefois, l'invention permet également de réaliser des économies lorsque le perméateur 2 est remplacé par un autre type d'appareil d'élimination de $CO_2$, par exemple par lavage aux amines. En effet, le flux traité par cet appareil est considérablement réduit.

## Revendications

1. Procédé de séparation d'un constituant particulier d'un mélange gazeux, caractérisé en ce que :
   - on fait passer le mélange dans l'espace d'entrée (1A) d'un perméateur (1) dans lequel on sépare par perméation au moins une partie d'un constituant plus perméable que ledit constituant particulier ;
   - on traite le résidu de ce perméateur en en éliminant ledit constituant particulier, de façon à produire un courant gazeux intermédiaire contenant un troisième constituant ; et
   - on injecte ce courant gazeux dans l'espace de production (1B) du perméateur (1), tout en maintenant, pendant ledit traitement, la pression partielle dudit constituant plus perméable dudit mélange à la sortie de l'espace de production (1B) du perméateur, à une valeur inférieure à celle que ce constituant plus perméable possède dans le mélange de départ.

2. Procédé suivant la revendication 1, caractérisé en ce que l'on élimine ledit constituant particulier par perméation dans un second perméateur (2) dont le résidu constitue le courant gazeux intermédiaire.

3. Procédé suivant la revendication 2, caractérisé en ce qu'on détend (en 5) le courant gazeux intermédiaire avant de l'injecter dans ledit espace de production (1B).

4. Procédé suivant la revendication 2, caractérisé en ce qu'on dilue le courant gazeux intermédiaire au moyen d'un gaz auxiliaire avant de l'injecter dans ledit espace de production (1B).

5. Procédé suivant la revendication 2, caractérisé en ce que, avant de faire passer le résidu du premier perméateur (1) dans le second perméateur (2), on élimine de ce résidu un excès dudit constituant plus perméable par passage dans l'espace haute pression (10A) d'un perméateur intermédiaire (10).

6. Procédé suivant l'une quelconque des revendications 1 à 5, caractérisé en ce que ledit mélange gazeux contient comme constituants principaux de l'hydrogène, du $CO_2$ et du monoxyde de carbone.

7. Installation de séparation d'un constituant particulier d'un mélange gazeux, caractérisée en ce qu'elle comprend :
   - un perméateur (1) dont l'espace d'entrée (1A) est relié à une source dudit mélange et qui permet la perméation d'un constituant plus perméable que ledit constituant particulier ;
   - un appareil (2,5 ; 2,8,8A ; 2,10) de traitement du résidu de ce perméateur comprenant des moyens (2) d'élimination dudit constituant particulier ; et
   - des moyens (4) d'injection de l'effluent de cet appareil dans l'espace de production (1B) du perméateur,
   l'appareil de traitement comportant des moyens (5 ; 8,8A ; 10) pour maintenir la pression partielle dudit constituant plus perméable dudit mélange à la sortie de l'espace de production (1B) du perméateur à une valeur inférieure à celle que ce constituant plus perméable possède dans le mélange de départ.

8. Installation suivant la revendication 7, caractérisée en ce que l'appareil de traitement comprend un second perméateur (2) dont l'espace haute pression (2A) est relié en amont, par une première conduite (3), à l'espace d'entrée (1A) du premier perméateur (1) et en aval, par une seconde conduite (4), à l'espace de production (1B) de ce dernier.

9. Installation suivant la revendication 8, caractérisée en ce qu'undispositif de détente (5) est monté dans la seconde conduite (4).

10. Installation suivant la revendication 8, caractérisée en ce qu'une conduite (8, 8A) d'injection d'un gaz auxiliaire débouche dans ladite seconde conduite (4) ou dans ladite première conduite (3).

11. Installation suivant la revendication 8, caractérisée en ce qu'elle comprend un perméateur intermédiaire (10) dont l'espace haute pression (10A) est interposé dans ladite première conduite (3).


**Patentansprüche**

1. Verfahren zur Abtrennung eines bestimmten Bestandteiles eines gasförmigen Gemisches, **dadurch gekennzeichnet**, daß man
   - das Gemisch in den Eintrittsraum (1A) einer Permeationsvorrichtung (1) gehen läßt, in welcher man durch Permeation wenigstens einen Teil eines Bestandteils abtrennt, der permeabler als der besagte bestimmte Bestandteil ist,
   - den Rückstand dieser Permeationsvorrichtung behandelt, indem man diesen bestimmten Bestandteil derart entfernt, daß man einen gasförmigen Zwischenstrom erzeugt, der einen dritten Bestandteil enthält, und
   - diesen gasförmigen Strom in den Produktionsraum (1B) der Permeationsvorrichtung (1) einspritzt, wobei man während dieser Behandlung den Partialdruck dieses permeableren Bestandteils des Gemisches am Ausgang des Produktionsraumes (1B) der Permeationsvorrichtung auf einem Wert unterhalb desjenigen hält, den der permeablere Bestandteil in dem Ausgangsgemisch besitzt.

2. Verfahren nach Anspruch 1, **dadurch gekennzeichnet**, daß man den bestimmten Bestandteil durch Permeation in einer zweiten Permeationsvorrichtung (2) entfernt, deren Rückstand den gasförmigen Zwischenstrom bildet.

3. Verfahren nach Anspruch 2, **dadurch gekennzeichnet**, daß man (bei 5) den gasförmigen Zwischenstrom vor dem Einspritzen in den Produktionsraum (1B) entspannt.

4. Verfahren nach Anspruch 2, **dadurch gekennzeichnet**, daß man den gasförmigen Zwischenstrom mittels eines Hilfsgases vor dem Einspritzen in den Produktionsraum (1B) verdünnt.

5. Verfahren nach Anspruch 2, **dadurch gekennzeichnet**, daß man, bevor man den Rückstand der ersten Permeationsvorrichtung (1) in die zweite Permeationsvorrichtung (2) gehen läßt, aus diesem Rückstand einen Überschuß der permeableren Bestandteils durch Überführung in den Hochdruckraum (10A) einer Zwischenpermeationsvorrichtung (10) beseitigt.

6. Verfahren nach einem der Ansprüche 1 bis 5, **dadurch gekennzeichnet,** daß das gasförmige Gemisch als Hauptbestandteile Wasserstoff, $CO_2$ und Kohlenmonoxid enthält.

7. Vorrichtung zur Abtrennung eines bestimmten Bestandteils eines gasförmigen Gemisches, **dadurch gekennzeichnet,** daß sie
   - eine Permeationsvorrichtung (1), deren Eintrittsraum (1A) mit einer Quelle dieses Gemisches verbunden ist und die die Permeation eines Bestandteils gestattet, der permeabler als der bestimmte Bestandteil ist,
   - eine Vorrichtung (2, 5; 2, 8, 8A; 2, 10) zur Behandlung des Rückstandes dieser Permeationsvorrichtung mit Einrichtungen (2) zur Beseitigung dieses bestimmten Bestandteils und
   - Einrichtungen (4) zum Einspritzen des Auslaufes dieser Apparatur in den Produtionsraum (1B) der Permeationsvorrichtung umfaßt,
   wobei die Behandlungsapparatur Einrichtungen (5; 8, 8A; 10) besitzt, um den Partialdruck des permeableren Bestandteils des Gemisches am Ausgang des Produktionsraumes (1B) der Permeationsvorrichtung auf einem Wert unterhalb desjenigen zu halten, den der permeablere Bestandteil in dem Ausgangsgemisch besitzt.

8. Vorrichtung nach Anspruch 7, **dadurch gekennzeichnet,** daß die Behandlungsapparatur eine zweite Permeationsvorrichtung (2) aufweist, deren Hochdruckraum (2A) aufstromwärts durch eine erste Leitung (3) mit dem Eintrittsraum (1A) der ersten Permeationsvorrichtung (1) und abstromwärts durch eine zweite Leitung (4) mit dem Produktionsraum (1B) der letzteren verbunden ist.

9. Vorrichtung nach Anspruch 8, **dadurch gekennzeichnet,** daß eine Entspannungseinrichtung (5) in der zweiten Leitung (4) angeordnet ist.

10. Vorrichtung nach Anspruch 8, **dadurch gekennzeichnet,** daß eine Leitung (8, 8A) zum Einspritzen eines Hilfsgases in der zweiten Leitung (4) oder in der ersten Leitung (3) mündet.

11. Vorrichtung nach Anspruch 8, **dadurch gekennzeichnet,** daß sie eine Zwischenpermeationsvorrichtung (10) besitzt, deren Hochdruckraum (10A) in die erste Leitung (3) eingeschaltet ist.

**Claims**

1. Process for the separation of a particular constituent from a gaseous mixture, characterised in that:
   - the mixture is caused to enter the inlet space (1A) of a permeator (1) in which there is separated by permeation at least a part of a constituent more permeable than the said particular constituent;
   - the residue of this permeator is treated by eliminating the said particular constituent, so as to produce an intermediate stream of gas containing a third constituent; and
   - this stream of gas is injected into the production space (1B) of the permeator (1), while maintaining, during the said treatment, the partial pressure of the said more permeable constituent of the said mixture at the outlet of the production space (1B) of the permeator, at a value less than that which this more permeable constituent possesses in the initial mixture.

2. Process according to claim 1, characterised in that the said particular constituent is eliminated by permeation in a second permeator (2), the residue of which constitutes the intermediate stream of gas.

3. Process according to claim 2, characterised in that the pressure (at 5) of the intermediate stream of gas is reduced before this intermediate stream of gas is injected into the said production space (1B).

4. Process according to claim 2, characterised in that the intermediate stream of gas is diluted by means of an additional gas before it is injected into the said production space (1B).

5. Process according to claim 2, characterised in that, before the residue of the first permeator (1) is caused to enter the second permeator (2), there is eliminated from this residue an excess of the said more permeable constituent by conveying it to the high pressure space (10A) of an intermediate permeator (10).

6. Process according to any one of claims 1 to 5, characterised in that the said gaseous mixture contains as the main constituents hydrogen, $CO_2$ and carbon monoxide.

7. Installation for the separation of a particular constituent of a gaseous mixture, characterised in that it comprises:
   - a permeator (1), the inlet space (1A) of which is connected to a source of the said mixture and which enables the permeation of a more permeable constituent than the said particular constituent;

- an apparatus (2,5 ; 2,8,8A ; 2,10) for the treatment of the residue of this permeator comprising means (2) for the elimination of the said particular constituent; and

- means (4) for the injection of the effluent from this apparatus into the production space (1B) of the permeator,

the treatment apparatus comprising means (5 ; 8,8A ; 10) for maintaining the partial pressure of the said more permeable constituent of the said mixture at the outlet of the production space (1B) of the said permeator at a value less than that possessed in the initial mixture by this more permeable constituent.

8. Installation according to claim 7, characterised in that the treatment apparatus comprises a second permeator (2), the high pressure space (2A) of which is connected upstream by way of a first pipe (3) to the inlet space (1A) of the first permeator (1), and downstream by way of a second pipe (4) to the production space (1B) of the latter.

9. Installation according to claim 8, characterised in that a pressure reduction device (5) is mounted in the second pipe (4).

10. Installation according to claim 8, characterised in that a pipe (8, 8A) for the injection of an additional gas opens into the said second pipe (4) or into the said first pipe (3).

11. Installation according to claim 8, characterised in that it comprises an intermediate permeator (10), the high pressure space (10A) of which is interposed in the said second pipe (3).

FIG.1

FIG.2

FIG.3